(19) Europäisches Patentamt
European Patent Office
Office européen des brevets

(11) **EP 2 741 402 B1**

(12) **EUROPEAN PATENT SPECIFICATION**

(45) Date of publication and mention
of the grant of the patent:
**17.08.2016 Bulletin 2016/33**

(51) Int Cl.:
**H02K 1/27** *(2006.01)*    **H02K 1/24** *(2006.01)*

(21) Application number: **11870716.5**

(22) Date of filing: **29.08.2011**

(86) International application number:
**PCT/CN2011/079060**

(87) International publication number:
**WO 2013/020311 (14.02.2013 Gazette 2013/07)**

(54) **MOTOR AND ROTOR THEREOF**

MOTOR UND ROTOR DAFÜR

MOTEUR ET ROTOR DE CE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2011 CN 201110224395**

(43) Date of publication of application:
**11.06.2014 Bulletin 2014/24**

(73) Proprietors:
• **Gree Electric Appliances, Inc. of Zhuhai**
**Zhuhai, Guangdong 519070 (CN)**
• **Gree Green Refrigeration Technology Center Co. Ltd. of Zhuhai**
**Zhuhai, Guangdong 519070 (CN)**

(72) Inventors:
• **HUANG, Hui**
**Zhuhai**
**Guangdong 519070 (CN)**
• **ZHANG, Wenming**
**Zhuhai**
**Guangdong 519070 (CN)**
• **XIAO, Yong**
**Zhuhai**
**Guangdong 519070 (CN)**
• **ZENG, Xueying**
**Zhuhai**
**Guangdong 519070 (CN)**
• **CHEN, Huajie**
**Zhuhai**
**Guangdong 519070 (CN)**
• **CHEN, Dongsuo**
**Zhuhai**
**Guangdong 519070 (CN)**
• **HU, Yusheng**
**Zhuhai**
**Guangdong 519070 (CN)**

(74) Representative: **Inchingalo, Simona**
**Bugnion S.p.A.**
**Viale Lancetti, 17**
**20158 Milano (IT)**

(56) References cited:
**CN-A- 102 111 051      CN-Y- 2 561 053**
**JP-A- H11 275 783      JP-A- 2010 226 784**

## Description

<u>TECHNICAL FIELD</u>

The present disclosure relates to the field of electric motor, and more specially, to a motor rotor and a motor having same.

<u>BACKGROUND OF THE INVENTION</u>

An Interior Permanent Magnet (IPM) Synchronous Motor is a motor, in which a layer of permanent magnets are provided inside the rotor, and which mainly uses permanent magnetic torque, assisted with reluctance torque.

Such a motor is known from JPH11275783 A formula for the combination of the permanent magnetic torque and the reluctance torque is as follows: $T = mp(L_q - L_d)i_d i_q + mp\Psi_{PM}i_q$.

Wherein, $T$ is the output torque of the motor, and the performance of the motor can be improved by increasing the value of $T$; the first term, after $T$ in the equation, is the reluctance torque; the second term is the permanent magnetic torque; $\Psi_{PM}$ is the maximum of the stator and rotor coupling flux generated by the permanent magnet of the motor; m is the number of the phases of the stator winding; $L_d$ and $L_q$ are respectively the d-axis inductance and the q-axis inductance, wherein d-axis refers to the axis that coincides with the main magnetic pole axis; q-axis refers to the axis that is perpendicular to the main magnetic pole axis, wherein "perpendicular to" involves the electric angle; $i_d$ and $i_q$ respectively represent the armature current component along the d-axis and the armature current component along the q-axis. As can be seen from the combination formula above, the output torque $T$ of the motor can be increased through increasing the second term, namely the permanent magnetic torque, or through increasing the inductance difference of the d-axis inductance and the q-axis inductance.

In the prior art, the performance of the motor is improved mainly by improving the performance of the permanent magnet, i.e. the value of the composite torque is increased by increasing the permanent magnetic torque, so as to improve the efficiency of the motor. A common method is to embed rare earth permanent magnets in the motor. As rare earth belongs to non-renewable resources and is expensive, the wider application of this kind of motor is limited. Moreover, being limited by the volume of the rotor, the space occupancy of the permanent magnets for each pole of the rotor has a limiting value, which limits the improvement of the efficiency of the motor as well.

<u>SUMMARY OF THE INVENTION</u>

The present invention aims at providing a motor rotor and a motor having same, which can improve the utilization of the permanent magnets, thereby improving the performance of the motor rotor.

In one aspect, the present disclosure provides a motor rotor, comprising an iron core and a plurality of sets of permanent magnets provided inside the iron core, wherein, a plurality of sets of mounting slots are circumferentially distributed in the iron core; each set of mounting slots comprises two or more layers of mounting slots provided at intervals in radial direction of the iron core; the permanent magnets of each set of permanent magnets are correspondingly embedded into the mounting slots of each set of mounting slots; on a cross section of each of the permanent magnets, which is perpendicular to the axis of the iron core, a formula $\dfrac{H}{L} \geq \dfrac{1}{10}$ is satisfied, wherein L is a length of the permanent magnet, H L 10 is a width of the permanent magnet; L is defined as a first distance between two end points of a first side of the permanent magnet, said first side is far away from the center of the iron core; H is defined as a second distance from the center point of a second side of the same permanent magnet to a straight line between the two end points of the first side of the permanent magnet, said second side is near to the center of the iron core.

Preferably, each set of mounting slot comprises a first mounting slot and a second mounting slot; the permanent magnets embedded in the first mounting slot and in the second mounting slot are respectively a first permanent magnet and a second permanent magnet; the length of the first permanent magnet is $L_{a1}$, and the width of the first permanent magnet is; and the formula $\dfrac{3}{10} \leq \dfrac{H_{a1}}{L_{a1}} \leq \dfrac{7}{10}$ is satisfied.

Preferably, the length of the second permanent magnet is $L_{a2}$ and the width of the second permanent magnet is $H_{a2}$, and a formula $\dfrac{3}{10} \leq \dfrac{H_{a2}}{L_{a2}} \leq \dfrac{7}{10}$ is satisfied.

Preferably, each set of mounting slot comprises a first mounting slot, a second mounting slot and a third mounting slot; the permanent magnets embedded in the first mounting slot, in the second mounting slot and in the third mounting slot are respectively a first permanent magnet, a second permanent magnet and a third permanent magnet; the length of the first permanent magnet is $L_{b1}$, and the width of the first permanent magnet is $H_{b1}$ ; and a formula $\dfrac{1}{10} \leq \dfrac{H_{b1}}{L_{b1}} \leq \dfrac{1}{2}$ is satisfied.

Preferably, the length of the second permanent magnet is $L_{b2}$ and the width of the second permanent magnet is $H_{b2}$ ; and a formula $\dfrac{1}{10} \leq \dfrac{H_{b2}}{L_{b2}} \leq \dfrac{1}{2}$ is satisfied.

Preferably, the length of the third permanent

magnet is $L_{b3}$ and the width of the third permanent magnet is $H_{b3}$ ; and a formula $\dfrac{1}{10} \le \dfrac{H_{b3}}{L_{b3}} \le \dfrac{1}{2}$ is satisfied.

In another aspect, the present disclosure provides a motor comprising the motor rotor described above.

According to the motor rotor and the motor having same of the present disclosure, the length L of the permanent magnet is defined as a first distance between two end points of a first side of the permanent magnet, said first side is far away from the center of the iron core; while the width H of the permanent magnet is defined as a second distance from the center point of a second side of the same permanent magnet to a straight line between the two end points of the first side of the permanent magnet, said second side is near to the center of the iron core. It is found through experimental results that, through adjusting the relation between the length *L* and the width *H* of the permanent magnet, the magnetic field strength in the air around the permanent magnet and the air gap magnetic flux density of the permanent magnet can be increased effectively, namely, the permanent magnet flux along the d-axis and the permanent magnet flux along the q-axis of the rotor can be increased effectively, thereby improving the utilization of the permanent magnets and improving the performance of the motor rotor without increasing the consumption of the permanent magnets.

BRIEF DESCRIPTION OF THE DRAWINGS

The drawings, constituting part of the present application, are provided for further comprehension of the present disclosure. The illustrative embodiments of the present invention and the corresponding description aim at explaining the present disclosure but are not intended to restrict the present disclosure. Regarding the drawings:

Fig. 1 is a structural diagram of the motor rotor according to the first embodiment of the present invention;
Fig. 2 is a schematic diagram illustrating the length *L* and the width *H* of the permanent magnet of the motor rotor according to the first embodiment of the present invention;
Fig. 3 is a schematic diagram illustrating the relation of H/L to the motor efficiency in the motor rotor according to the first embodiment of the present invention;
Fig. 4 is a schematic diagram illustrating the length *L* and the width *H* of the permanent magnet of the motor rotor according to the second embodiment of the present invention;
Fig. 5 is a schematic diagram illustrating the relation of H/L to the motor efficiency in the motor rotor according to the second embodiment of the present invention;

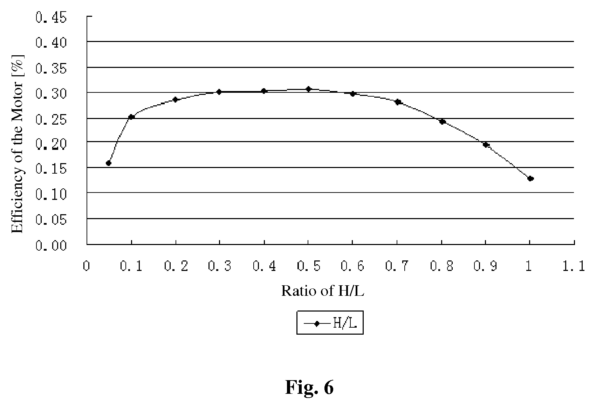

Fig.6 is a schematic diagram illustrating the relation of H/L to air gap magnetic flux density in the motor rotor of the present disclosure.

DETAILED DESCRIPTION OF THE PREFERRED EMBODIMENTS

The embodiments of the present invention will be described in details with reference to the accompanying drawings.

Based on studies on the relation between the first distance and the second distance, wherein said first distance is between two end points of the inner arc of a permanent magnet 20 disposed in a mounting slot of the motor rotor, and the second distance is, along the d-axis, between the center point of the outer arc of the same permanent magnet 20 and the center point of the straight line which is between two end points of the inner arc, the present disclosure provides a method for increasing the permanent magnetic torque under the condition of a given consumption of permanent magnets, that is, the present disclosure provides an optimum design for the size of the permanent magnets, thereby maximizing the composite torque *T* of the motor, and increasing the efficiency of the motor.

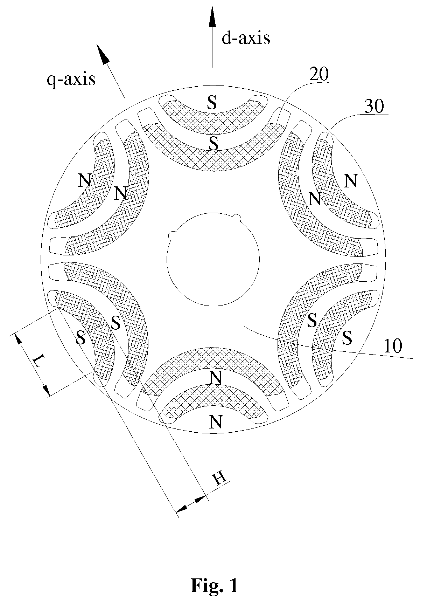

As shown in Fig. 1, the motor rotor of the present disclosure comprises an iron core 10 and permanent magnets 20 provided therein. A plurality of sets of mounting slots 30 are circumferentially distributed in the iron core 10. Each set of mounting slots 30 comprises two or more layers of mounting slots 30 provided at intervals in radial direction of the iron core 10. There are a plurality of sets of permanent magnets 20, and the permanent magnets 20 of each set of permanent magnets 20 are correspondingly embedded into the mounting slots 30 of each set of mounting slots 30. On a cross section of the permanent magnet 20, which is perpendicular to the axis of the iron core 10, the length *L* of the permanent magnet is defined as the first distance between two end points of a first side of the permanent magnet 20, said first side is far away from the center of the iron core 10. The width *H* of the permanent magnet is defined as the second distance from the center point of the second side of the same permanent magnet 20 to the straight line between the two end points of the first side of the permanent magnet 20, said second side is far away from the center of the iron core 10. The formula $\dfrac{H}{L} \ge \dfrac{1}{10}$ is satisfied.

As shown in Fig. 1, the motor rotor of the present disclosure comprises the iron core 10 formed by stacked and pressed silicon steel sheets, and the permanent magnets 20 embedded in the iron core 10. The iron core 10 of the motor rotor comprises a plurality of sets of mounting slots 30 which run through the iron core 10. Each set of mounting slots 30 comprises two or more layers of mounting slots 30, the layers are separated therebetween by part of the iron core. The permanent magnets 20 are embedded in the mounting slots 30, and the permanent magnets 20 in the same set of the permanent magnets face the periphery of the motor rotor and have the same magnetic polarity. For example, as shown in Fig. 1, two layers of permanent magnets 20 along the d-axis are both S-pole magnets, and adjacent two sets of permanent magnets 20 have an opposite magnetic polarity, i.e., the six sets of permanent magnets circumferentially distributed in the iron core are alternating sets of N-pole magnets and S-pole magnets. After permanent magnets are embedded in the mounting slots 30, a clearance is left between each of two ends of each permanent magnet and its corresponding magnet slot 30. The clearance is filled with air or non-magnetic medium. There is a magnetic flux channel formed by silicon steel sheets with a certain width between each two adjacent layers of permanent magnets of the same set of the permanent magnets 20. There are connecting ribs formed by silicon steel sheets with non-constant width between two adjacent sets of mounting slots 30.

With the permanent magnets 20 embedded in the mounting slots 30, the rotor can provide reluctance torque. There are a plurality of layers of permanent magnets 20 arranged along the d-axis, and the reluctance of the permanent magnet 20 itself is quite large, which is about equal to the magnetic permeability of air, so the d-axis inductance $L_d$ is less, while the q-axis inductance $L_q$ is greater due to the greater magnetic permeability of the iron core 10 itself. Accordingly, the reluctance torque of the motor rotor is increased; thereby the output torque of the motor is increased, i.e., the efficiency of the motor is improved. The conventional method of improving the efficiency of the motor through increasing rare earth permanent magnets can be replaced with the above scheme of improving the efficiency of the motor replaces, which reduces the usage of the rare earth, saves the resources and reduces the pollution of environment on one hand, and on the other hand, lowers the production cost and improves the competitiveness of products.

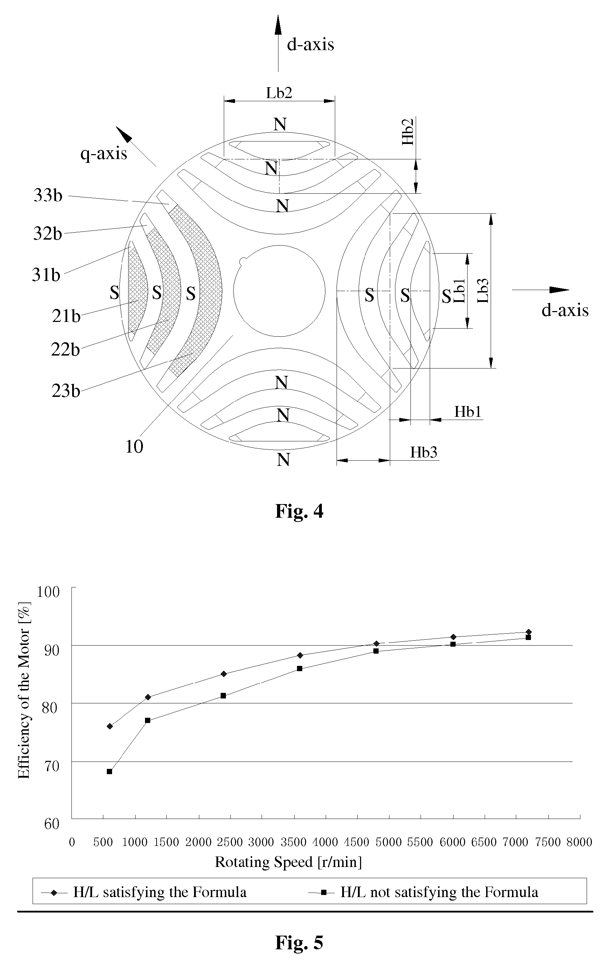

Additionally, the rotor can provide permanent magnetic reluctance torque because of the permanent magnets 20 embedded. The length L of the permanent magnet is defined as a first distance between two end points of a first side of the permanent magnet 20, said first side is far away from the center of the iron core 10; while the width H of the permanent magnet is defined as a second distance from the center point of a second side of the same permanent magnet 20 to a straight line between the two end points of the first side of the permanent magnet 20, said second side is near to the center of the iron core 10. It is found through experimental results that, through adjusting the relation between the length *L* and the width *H* of the permanent magnet, the air gap magnetic flux density of the permanent magnet can be increased effectively (air gap magnetic flux density refers to the magnetic field strength in the air; the greater is the air gap magnetic flux density, the greater are the magnetic field strength and the torque of the permanent magnet), namely, the permanent magnet flux along the d-axis and the permanent magnet flux along the q-axis of the rotor can be increased effectively, thereby improving the utilization of the permanent magnets and improving the performance of the motor rotor without increasing the consumption of the permanent magnets. As shown in Fig.5, when the formula $\dfrac{H}{L} \geq \dfrac{1}{10}$ is satisfied, the air gap magnetic flux density starts a stage of gently increasing.

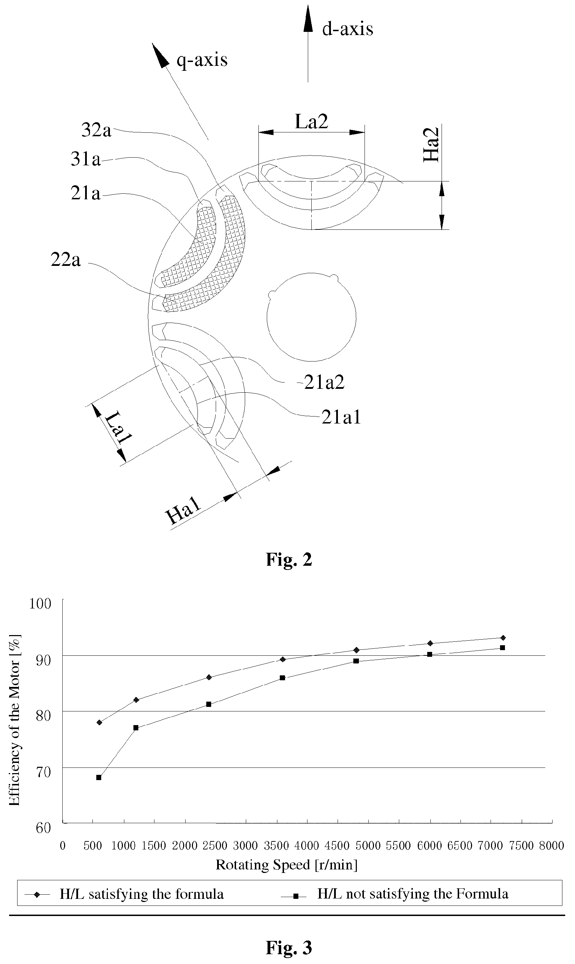

As shown in Fig.2, according to the first embodiment of the present invention, each set of mounting slot 30 comprises a first mounting slot 31a and a second mounting slot 32a. The permanent magnets 20 embedded in the first mounting slot 31a and the second mounting slot 32a are respectively a first permanent magnet 21a and a second permanent magnet 22a. The length of the first permanent magnet 21a is $L_{a1}$, and the width of the first permanent magnet 21a is $H_{a1}$. The formula $\dfrac{3}{10} \leq \dfrac{H_{a1}}{L_{a1}} \leq \dfrac{7}{10}$ is satisfied. Preferably, the length of the second permanent magnet 22a is $L_{a1}$ and the width of the second permanent magnet 22a is $H_{a2}$, and the formula $\dfrac{3}{10} \leq \dfrac{H_{a2}}{L_{a2}} \leq \dfrac{7}{10}$ is satisfied.

As shown in Fig.2, the permanent magnets 21 and 22 are respectively the first permanent magnet embedded in the first mounting slot 31a and the second permanent magnet embedded in the second mounting slot 32a. As each pole of the rotor occupies a certain sectorial area, the curvature and the depth of the arc of the embedded arc-shaped permanent magnet are random from the view of structure. However, according to the experimental results, the formula $\dfrac{3}{10} \leq \dfrac{H_{a1}}{L_{a1}} \leq \dfrac{7}{10}$ can be satisfied through regulating the relation between the first distance and the second distance, said first distance is between two end points of the inner arc 21a1 of the permanent magnet disposed in the mounting slot 31a, and said second distance H is along the d-axis from the center point of the outer arc 21a2 of the permanent magnet to the straight line between the two end points of the inner arc 21a1, thus the permanent magnet flux will be increased under the condition of a given volume of permanent magnets. Fig.3 is a schematic diagram illustrating curves of H/L versus the motor efficiency, which are drawn based on mean values of many groups of experimental data. As shown in Fig.3, when the formula $\dfrac{3}{10} \leq \dfrac{H_{a1}}{L_{a1}} \leq \dfrac{7}{10}$ is satisfied, the efficiency of the motor is higher than those when the formula is not satisfied. Especially, if the formula is satisfied, the effects achieved when the motor operates at lower rates are more prominent. Preferably, when the length $L_{a2}$ and the width $H_{a2}$ of the second permanent magnet 22a embedded in the second mounting slot 32a satisfy the formula $\frac{3}{10} \leq \frac{H_{a2}}{L_{a2}} \leq \frac{7}{10}$, the efficiency of the motor can be further increased.

As shown in Fig.4, according to the second embodiment of the present invention, each set of mounting slot 30 comprises a first mounting slot 31b, a second mounting slot 32b and a third mounting slot 33b. The permanent magnets 20 embedded in the first mounting slot 31b, the second mounting slot 32b and the third mounting slot 33b are respectively a first permanent magnet 21b, a second permanent magnet 22b and a third permanent magnet 23b. The length of the first permanent magnet 21b is $L_{b1}$, and the width of the first permanent magnet 21b is $H_{b1}$, and the formula $\frac{1}{10} \leq \frac{H_{b1}}{L_{b1}} \leq \frac{1}{2}$ is satisfied. Preferably, the length of the second permanent magnet 22b is $L_{b2}$ and the width of the second permanent magnet 22b is $H_{b2}$, and the formula $\frac{1}{10} \leq \frac{H_{b2}}{L_{b2}} \leq \frac{1}{2}$ is satisfied. Preferably, the length of the third permanent magnet 23b is $L_{b3}$ and the width of the third permanent magnet 23b is $H_{b3}$, and the formula $\frac{1}{10} \leq \frac{H_{b3}}{L_{b3}} \leq \frac{1}{2}$ is satisfied.

Preferably, the formulae above are applicable to the scheme of the rotor with two layers of permanent magnets 20, and they are not restricted to rotors having six sets of permanent magnets 20 such as shown in Fig.2, they are also applicable to rotors having four poles or eight poles.

As shown in Fig.4, in the second embodiment, each set of mounting slot 30 comprises three layers of mounting slots: the first mounting slot 31b, the second mounting slot 32b and the third mounting slot 33b. It is found through the experimental results that, the formula $\frac{1}{10} \leq \frac{H_{b1}}{L_{b1}} \leq \frac{1}{2}$ can be satisfied through regulating the relation between the first distance and the second distance, said first distance is between two end points of the inner arc of the first permanent magnet 21b disposed in the first mounting slot 31b, and said second distance H is along the d-axis from the center point of the outer arc of the permanent magnet 21b to the straight line between the two end points of the inner arc, thus the permanent magnet flux will be increased under the condition of a given volume of permanent magnets, thereby improving the permanent magnetic torque, and improving the efficiency of the motor finally. Fig.5 is a schematic diagram illustrating curves of H/L versus the motor efficiency, which are drawn based on mean values of many groups of experimental data.

As shown in Fig.5, when the formula $\frac{1}{10} \leq \frac{H_{b1}}{L_{b1}} \leq \frac{1}{2}$ is satisfied, the efficiency of the motor is higher than those when the formula is not satisfied. Especially, if the formula is satisfied, the effects achieved when the motor operates at lower rates are more prominent. Preferably, when the length $L_{b2}$ and the width $H_{b2}$ of the second permanent magnet 22b embedded in the second mounting slot 32b satisfy the formula $\frac{1}{10} \leq \frac{H_{b2}}{L_{b2}} \leq \frac{1}{2}$, the efficiency of the motor can be further increased. Preferably, when the length $L_{b3}$ and the width $H_{b3}$ of the third permanent magnet 23b embedded in the third mounting slot 33b satisfy the formula $\frac{1}{10} \leq \frac{H_{b3}}{L_{b3}} \leq \frac{1}{2}$, the efficiency of the motor can be further increased.

Preferably, the formulae above are applicable to the scheme of the rotor with three layers of permanent magnets 20, and they are not restricted to rotors having four sets of permanent magnets 20 such as shown in Fig.2, they are also applicable to rotors having six poles or eight poles.

The permanent magnets embedded in the motor rotor and the mounting slots of the present disclosure may respectively be designed to be an arc with even thickness or with gradual decreased thickness from the center to two ends.

The present disclosure further provides a motor, which comprises the motor rotor described above.

Under the condition of a given volume of permanent magnets, the motor of the present disclosure increases the utilization of the permanent magnet flux and increases the permanent magnetic torque of the motor through defining the ratio between the length and the width of the permanent magnets, thereby improving the efficiency of the motor. The motor of the present disclosure can be applied in compressors of air conditioners, in electric vehicles and in electric fan systems.

As can be seen from the description above, the embodiments of the present invention can achieve the technical effects as follows:

The motor rotor and the motor having same of the present disclosure can increase the utilization of the permanent magnet torque and improve the efficiency of motor under the condition of a given volume of permanent magnets, or can reduce the consumption of the permanent magnets and further save materials and reduce the production cost of the motor, under the condition that the efficiency of the motor is unchanged.

The preferred embodiments described above are not restricted. It will be understood by those skilled in the art that various amendments, replacements and improvements based on the thoughts and principles of the disclosure may be made therein without departing from the scope of the disclosure.

## Claims

1. A motor rotor, comprising an iron core (10) and a plurality of sets of permanent magnets (20) provided inside the iron core (10), wherein:

   a plurality of sets of mounting slots (30) are circumferentially distributed in the iron core (10); each set of mounting slots (30) comprises two or more layers of mounting slots (30) provided at intervals in radial direction of the iron core (10); the permanent magnets (20) of each set of permanent magnets (20) are correspondingly embedded into the mounting slots (30) of each set of mounting slots (30); **characterised in that** on a cross section of each of the permanent magnets, which is perpendicular to the axis of the iron core (10), a formula $\dfrac{H}{L} \geq \dfrac{1}{10}$ is satisfied, wherein L is a length of the permanent magnet, H is a width of the permanent magnet; L is defined as a first distance between two end points of a first side of the permanent magnet (20), said first side is far away from the center of the iron core (10); H is defined as a second distance from the center point of a second side of the same permanent magnet (20) to a straight line between the two end points of the first side of the permanent magnet (20), said second side is near to the center of the iron core (10).

2. The motor rotor according to claim 1, wherein: each set of mounting slot (30) comprises a first mounting slot (31a) and a second mounting slot (32a); the permanent magnets (20) embedded in the first mounting slot (31a) and in the second mounting slot (32a) are respectively a first permanent magnet (21a) and a second permanent magnet (22a); the length of the first permanent magnet (21a) is $L_{a1}$, and the width of the first permanent magnet (21a) is $H_{a1}$; and a formula $\dfrac{3}{10} \leq \dfrac{H_{a1}}{L_{a1}} \leq \dfrac{7}{10}$ is satisfied.

3. The motor rotor according to claim 2, wherein: the length of the second permanent magnet (22a) is $L_{a2}$ and the width of the second permanent magnet (22a) is $H_{a2}$, and a formula $\dfrac{3}{10} \leq \dfrac{H_{a2}}{L_{a2}} \leq \dfrac{7}{10}$ is satisfied.

4. The motor rotor according to claim 1, wherein: each set of mounting slot (30) comprises a first mounting slot (31b), a second mounting slot (32b) and a third mounting slot (33b); the permanent magnets (20) embedded in the first mounting slot (31b), in the second mounting slot (32b) and in the third mounting slot (33b) are respectively a first permanent magnet (21b), a second permanent magnet (22b) and a third permanent magnet (23b); the length of the first permanent magnet (21b) is $L_{b1}$, and the width of the first permanent magnet (21b) is $H_{b1}$; and the formula $\dfrac{1}{10} \leq \dfrac{H_{b1}}{L_{b1}} \leq \dfrac{1}{2}$ is satisfied.

5. The motor rotor according to claim 4, wherein: the length of the second permanent magnet (22b) is $L_{b2}$ and the width of the second permanent magnet (22b) is $H_{b2}$; and the formula $\dfrac{1}{10} \leq \dfrac{H_{b2}}{L_{b2}} \leq \dfrac{1}{2}$ is satisfied.

6. The motor rotor according to claim 4, wherein: the length of the third permanent magnet (23b) is $L_{b3}$ and the width of the third permanent magnet (23b) is $H_{b3}$; and the formula $\dfrac{1}{10} \leq \dfrac{H_{b3}}{L_{b3}} \leq \dfrac{1}{2}$ is satisfied.

7. A motor, comprising the motor rotor according to any one of the claims 1 to 6.

## Patentansprüche

1. Motorrotor, umfassend einen Eisenkern (10) und eine Vielzahl von Sätzen Permanentmagneten (20), bereitgestellt im Eisenkern (10), wobei eine Vielzahl von Sätzen an Montagevertiefungen (30) umfangsseitig im Eisenkern (10) verteilt sind, wobei ein jeder Satz Montagevertiefungen (30) zwei oder mehr Schichten Montagevertiefungen (30) umfasst, die in Abständen in radialer Richtung des Eisenkerns (10) bereitgestellt sind, wobei die Permanentmagneten (20) eines jeden Satzes von Permanentmagneten (20) entsprechend in den Montagevertiefungen (30) eines jeden Satzes von Montagevertiefungen (30) eingebettet sind, **dadurch gekennzeichnet, dass** eine Formel auf einem Querschnitt eines jeden der Permanentmagneten, der senkrecht zur Achse des Eisenkerns (10) angeordnet ist, $\dfrac{H}{L} \geq \dfrac{1}{10}$ erfüllt wird, wobei L eine Länge des Permanentmagneten und H eine Breite des Permanentmagneten ist, wobei L als ein erster Abstand zwischen zwei Endpunkten einer ersten Seite des Permanentmagneten (20) definiert ist, wobei die erste Seit weit entfernt von der Mitte des Eisenkerns (10) ist, wobei H als ein zweiter Abstand vom Mittelpunkt einer zweiten Seite desselben Permanentmagneten (20) zu einer geraden Linie zwischen den zwei Endpunkten der ersten Seite des Permanentmagneten (20) definiert ist, wobei diese zweite Seite nah an der Mitte des Eisenkerns (10) angeordnet ist.

2. Motorrotor nach Anspruch 1, wobei ein jeder Satz Montagevertiefungen (30) eine erste Montagevertiefung (31a) und eine zweite Montagevertiefung (32a) umfasst, wobei es sich bei den in der ersten Montagevertiefung (31a) und in der zweiten Montagevertiefung (32a) eingebetteten Permanentmagneten (20) jeweils um einen ersten Permanentmagnet (21a) und einen zweiten Permanentmagnet (22a) handelt, wobei die Länge des ersten Permanentmagnets (21a) $L_{a1}$ ist und die Breite des ersten Permanentmagnets (21a) $H_{a1}$ und die Formel $\dfrac{3}{10} \leq \dfrac{H_{a1}}{L_{a1}} \leq \dfrac{7}{10}$ erfüllt wird.

3. Motorrotor nach Anspruch 2, wobei die Länge des zweiten Permanentmagnets (22a) $L_{a2}$ ist und die Breite des zweiten Permanentmagnets (22a) $H_{a2}$ und die Formel $\dfrac{3}{10} \leq \dfrac{H_{a2}}{L_{a2}} \leq \dfrac{7}{10}$ erfüllt wird.

4. Motorrotor nach Anspruch 1, wobei ein jeder Satz Montagevertiefungen (30) eine erste Montagevertiefung (31b) und eine zweite Montagevertiefung (32b) und eine dritte Montagevertiefung (33b) umfasst, wobei es sich bei den in der ersten Montagevertiefung (31b), in der zweiten Montagevertiefung (32b) und in der dritten Montagevertiefung (33b) eingebetteten Permanentmagneten (20) jeweils um einen ersten Permanentmagnet (21b), einen zweiten Permanentmagnet (22b) und einen dritten Permanentmagnet (23b) handelt, wobei die Länge des ersten Permanentmagnets (21b) $L_{b1}$ ist und die Breite des ersten Permanentmagnets (21b) $H_{b1}$ und die Formel $\dfrac{1}{10} \leq \dfrac{H_{b1}}{L_{b1}} \leq \dfrac{1}{2}$ erfüllt wird.

5. Motorrotor nach Anspruch 4, wobei die Länge des zweiten Permanentmagnets (22b) $L_{b2}$ ist und die Breite des zweiten Permanentmagnets (22b) $H_{b2}$

und die Formel $\dfrac{1}{10} \leq \dfrac{H_{b2}}{L_{b2}} \leq \dfrac{1}{2}$ erfüllt wird.

6. Motorrotor nach Anspruch 4, wobei die Länge des dritten Permanentmagnets (23b) $L_{b3}$ ist und die Breite des zweiten Permanentmagnets (23b) $H_{b3}$ und die Formel $\dfrac{1}{10} \leq \dfrac{H_{b3}}{L_{b3}} \leq \dfrac{1}{2}$ erfüllt wird.

7. Motor, umfassend den Motorrotor nach einem der Ansprüche 1 bis 6.

**Revendications**

1. Rotor de moteur, comprenant un noyau de fer (10) et une pluralité d'ensembles d'aimants permanents (20) prévus à l'intérieur du noyau de fer (10), dans lequel : une pluralité d'ensembles de fentes de montage (30) sont réparties sur la circonférence dans le noyau de fer (10) ; chaque ensemble de fentes de montage (30) comprend deux ou plusieurs couches de fentes de montage (30) prévues, à intervalles, dans la direction radiale du noyau de fer (10) ; les aimants permanents (20) de chaque ensemble d'aimants permanents (20) sont intégrés en correspondance dans les fentes de montage (30) de chaque ensemble de fentes de montage (30) ; **caractérisé en ce que** sur une section transversale de chacun des aimants permanents, étant perpendiculaire à l'axe du noyau de fer (10), une formule $\dfrac{H}{L} \geq \dfrac{1}{10}$ est satisfaite, dans laquelle L correspond à une longueur de l'aimant permanent, H correspond à une largeur de l'aiment permanent ; L est défini comme étant une première distance entre deux points d'extrémité d'un premier côté de l'aimant permanent (20), ledit premier côté étant éloigné du centre du noyau de fer (10) ; H est défini comme étant une seconde distance à partir du point central d'un second côté du même aimant permanent (20) jusqu'à une ligne rectiligne entre les deux points d'extrémité du premier côté de l'aimant permanent (20), ledit second côté étant proche du centre du noyau de fer (10).

2. Rotor de moteur selon la revendication 1, dans lequel : chaque ensemble de fentes de montage (30) comprend une première fente de montage (31a) et une seconde fente de montage (32a) ; les aimants permanents (20) intégrés dans la première fente de montage (31a) et dans la seconde fente de montage (32a) sont respectivement un premier aimant permanent (21a) et un second aimant permanent (22a) ; la longueur du premier aimant permanent (21a) est

$L_{a1}$ et la largeur du premier aimant permanent (21a)

est $H_{a1}$ ; et une formule $\dfrac{3}{10} \leq \dfrac{H_{a1}}{L_{a1}} \leq \dfrac{7}{10}$ est sa-

tisfaite.

**3.** Rotor de moteur selon la revendication 2, dans lequel : la longueur du second aimant permanent (22a) est $L_{a2}$ et la largeur du second aimant perma-

nent (22a) est $H_{a2}$, et une formule $\dfrac{3}{10} \leq \dfrac{H_{a2}}{L_{a2}} \leq \dfrac{7}{10}$

est satisfaite.

**4.** Rotor de moteur selon la revendication 1, dans lequel : chaque ensemble de fentes de montage (30) comprend une première fente de montage (31b), une seconde fente de montage (32b) et une troisième fente de montage (33b) ; les aimants permanents (20) intégrés dans la première fente de montage (31b), dans la seconde fente de montage (32b) et dans la troisième fente de montage (33b) sont respectivement un premier aimant permanent (21b), un second aimant permanent (22b) et un troisième aimant permanent (23b) ; la longueur du premier aimant permanent (21b) est $L_{b1}$ et la largeur du premier aimant permanent (21b) est $H_{b1}$, et la formule

$\dfrac{1}{10} \leq \dfrac{H_{b1}}{L_{b1}} \leq \dfrac{1}{2}$ est satisfaite.

**5.** Rotor de moteur selon la revendication 4, dans lequel : la longueur du second aimant permanent (22b) est $L_{b2}$ et la largeur du second aimant perma-

nent (22b) est $H_{b2}$ ; et la formule $\dfrac{1}{10} \leq \dfrac{H_{b2}}{L_{b2}} \leq \dfrac{1}{2}$

est satisfaite.

**6.** Rotor de moteur selon la revendication 4, dans lequel : la longueur du troisième aimant permanent (23b) est $L_{b3}$ et la largeur du troisième aimant permanent (23b) est $H_{b3}$ ; et la formule

$\dfrac{1}{10} \leq \dfrac{H_{b3}}{L_{b3}} \leq \dfrac{1}{2}$ est satisfaite.

**7.** Moteur comprenant le rotor de moteur selon l'une quelconque des revendications de 1 à 6.

**Fig. 1**

**Fig. 2**

**Fig. 3**

**Fig. 4**

**Fig. 5**

**Fig. 6**